# EUROPEAN PATENT APPLICATION

(11) **EP 4 768 372 A1**
(43) Date of publication of application: **01.07.2026**
(21) Application number: 24857760.3
(22) Date of filing: 03.04.2024
(51) Int. Cl.: B62D 25/20, B60K 1/04

(54) **CHASSIS, VEHICLE BODY, VEHICLE BODY ASSEMBLY METHOD AND VEHICLE**

(30) Priority: 31.08.2023 CN 202311120781
(71) Applicant: Contemporary Amperex Intelligence Technology (Shanghai) Limited, Shanghai 201306 (CN)
(72) Inventor: SONG, Sichuan, Shanghai 201306 (CN); HE, Bin, Shanghai 201306 (CN); ZHAO, Hua, Shanghai 201306 (CN)
(74) Representative: Gong, Jinping
(86) International application number: PCT/CN2024/085791
(87) International publication number: WO 2025/044210

(57) **Abstract**

A vehicle frame (100) is disposed in a vehicle (1). The vehicle frame (100) includes: a beam frame (10), configured to install a suspension; an energy compartment frame (20), where the beam frame (10) abuts against an end portion of the energy compartment frame (20) along a first direction (Z), and the first direction (Z) is a vehicle height direction; and a connection structure (30), configured to fixedly connect the energy compartment frame (20) to the beam frame (10) along the first direction (Z). Further disclosed are a vehicle body, a vehicle body assembly method, and a vehicle (1). Assembly gaps are not prone to occur between the beam frame (10) and the energy compartment frame (20) of the vehicle frame (100), thereby reducing the assembly difficulty of the vehicle frame (100).

## Description

The present application claims priority to the Chinese Patent Application No. 202311120781.3, filed with the China National Intellectual Property Administration on August 31, 2023, and entitled "VEHICLE FRAME, VEHICLE BODY, VEHICLE BODY ASSEMBLY METHOD, AND VEHICLE", which is incorporated herein by reference in its entirety.

### TECHNICAL FIELD

The present application relates to the field of vehicles, and in particular, to a vehicle frame, a vehicle body, a vehicle body assembly method, and a vehicle.

### BACKGROUND

Energy conservation and emission reduction are crucial to the sustainable development of the automobile industry. New energy vehicles, with their advantages in energy conservation and emission reduction, have become an important part of the sustainable development of the automobile industry.

Currently, a lower vehicle frame structure of new energy vehicles generally includes components such as a vehicle frame and a battery. However, during the assembly process of the vehicle frame, problems such as assembly gaps between components are prone to occur, resulting in difficulties in vehicle frame assembly.

### SUMMARY

In view of this, the present application provides a vehicle frame, a vehicle body, a vehicle body assembly method, and a vehicle to solve the problem of assembly gaps that easily exist between components of the vehicle frame.

According to a first aspect, an embodiment of the present application provides a vehicle frame disposed in a vehicle, the vehicle frame including:
a beam frame, configured to install a suspension;
an energy compartment frame, where the beam frame abuts against an end of the energy compartment in a first direction, and the first direction is a vehicle height direction; and
a connection structure, configured to fixedly connect the energy compartment frame to the beam frame along the first direction.

The vehicle frame provided by embodiments of the present application includes a beam frame, an energy compartment frame, and a connection structure. The beam frame abuts against an end of the energy compartment frame along the first direction, and the connection structure can fixedly connect the energy compartment frame to the beam frame along the first direction to assemble the vehicle frame. Since an assembly direction of the beam frame and the energy compartment frame is the same as a connection direction of the connection structure, assembly gaps are not prone to occur between the beam frame and the energy compartment frame. Since the first direction is a vehicle height direction, the beam frame falls onto an upper portion of the energy compartment frame along the first direction so as to achieve the abutment between the beam frame and the energy compartment frame, and the assembly process is relatively simple. The above vehicle frame is not prone to assembly gaps, thereby improving installation accuracy, reducing assembly difficulty, and solving the problem of vehicle frame assembly difficulties caused by assembly gaps.

In some embodiments, an end of the energy compartment frame along a second direction is provided with a positioning portion, and the beam frame abuts against the positioning portion along the first direction, where the second direction is a vehicle traveling direction; and
the connection structure includes a first fastener, the first fastener running through the beam frame and the positioning portion along the first direction.

By adopting the above technical solution, the end of the energy compartment frame is provided with a positioning portion, and the beam frame abuts against the positioning portion along the first direction, such that assembly gaps are not prone to occur between the beam frame and the energy compartment frame. The first fastener runs through the beam frame and the positioning portion along the first direction, so that the first fastener can assemble or disassemble the energy compartment frame and the beam frame along the first direction. The above vehicle frame does not need to be provided with fasteners arranged along a vehicle body width direction, solving the problem that assembly gaps are prone to occur between the energy compartment frame and the beam frame in the vehicle body width direction.

In some embodiments, the beam frame is provided with a connection portion extending along the second direction; and
the connection portion abuts against and fits the positioning portion along the first direction, the first fastener running through the connection portion and the positioning portion along the first direction.

By providing the connection portion extending along the second direction on the beam frame, it is convenient for the connection portion to lap against the positioning portion, facilitating the beam frame to abut against and fit the positioning portion.

In some embodiments, surfaces of the positioning portion and the connection portion that abut against each other are both planar.

By adopting the above technical solution, the positioning portion and the connection portion are tightly fitted, further reducing the probability of assembly gaps occurring between the beam frame and the energy compartment frame.

In some embodiments, the beam frame is provided with at least two connection portions, where two of the connection portions are spaced apart along a third direction, the third direction being perpendicular to the first direction and the second direction; and
the energy compartment frame is provided with at least two positioning portions, where two of the positioning portions are spaced apart along the third direction, and the connection portions are connected to the positioning portions in a one-to-one correspondence.

By adopting the above technical solution, each connection portion can be connected to a corresponding positioning portion along the first direction, improving the connection strength between the beam frame and the energy compartment frame, and the vehicle frame exhibiting good structural stability.

In some embodiments, the energy compartment frame includes a frame body, a mounting plate disposed in the frame body, and a connection block disposed at a corner of the frame body, where the mounting plate is configured to connect a battery cell; and
the corner of the frame body and the connection block together form the positioning portion, and at least one of the frame body and the connection block is provided with a first connection hole for installing the first fastener.

By adopting the above technical solution, the energy compartment frame is provided with the positioning portion at its corner, which facilitates the connection of the energy compartment frame to the beam frame through the connection structure and is not prone to interference with the battery cell.

In some embodiments, the beam frame is further provided with an abutting portion, the abutting portion and the energy compartment frame are both disposed on the same side of the connection portion along the first direction, and the abutting portion abuts against the energy compartment frame along the second direction.

By adopting the above technical solution, the abutting portion abuts against the energy compartment frame along the second direction, alignment of the beam frame and the energy compartment frame in the second direction can be achieved, and assembly gaps are not prone to occur between the beam frame and the energy compartment frame in the second direction.

In some embodiments, the vehicle frame further includes a second fastener, and the second fastener runs through the abutting portion and the energy compartment frame along the second direction.

By adopting the above technical solution, the vehicle frame has good structural stability, and when the vehicle encounters a collision, the connection between the beam frame and the energy compartment frame is not prone to warping or deformation.

In some embodiments, the energy compartment frame is provided therein with an accommodation space for accommodating the battery cell, and the connection structure and the second fastener are both disposed outside the accommodation space.

By adopting the above technical solution, neither the connection structure nor the second fastener enters the accommodation space for the battery cell, so the assembly of the battery cell with the energy compartment frame is not affected, improving the structural compactness of an energy compartment.

In some embodiments, the beam frame includes a front compartment and a rear compartment; the energy compartment frame includes a first end and a second end oppositely disposed along the second direction, the first end being connected to the front compartment, and the second end being connected to the rear compartment;
where the front compartment abuts against the first end along the first direction; and/or
the rear compartment abuts against the second end along the first direction.

By adopting the above technical solution, the vehicle frame has a three-segment structure, which can meet the needs of upper and lower vehicle body assembly; and the front compartment and/or rear compartment can abut against the energy compartment frame, so that assembly gaps are not prone to occur between the front compartment and/or rear compartment and the energy compartment frame.

In some embodiments, the abutting portion is disposed at an end of the front compartment close to the energy compartment frame; and/or
the abutting portion is disposed at an end of the rear compartment close to the energy compartment frame.

By adopting the above technical solution, the vehicle frame is not prone to deformation.

In some embodiments, the front compartment further includes an upper longitudinal beam and a lower longitudinal beam distributed along the first direction, and a vertical beam connected between the upper longitudinal beam and the lower longitudinal beam, where the connection portion is connected to the upper longitudinal beam, and the abutting portion is connected to the lower longitudinal beam.

By adopting the above technical solution, the structural strength of the front compartment is improved; the connection portion falls on an upper portion of the energy compartment frame along the first direction, and the abutting portion abuts against a side portion of the energy compartment frame along the second direction, and the connection portion and the abutting portion do not interfere with each other.

In some embodiments, a surface of the abutting portion facing the energy compartment frame and a surface of the energy compartment frame facing the abutting portion are both planes parallel to the first direction.

By adopting the above technical solution, the abutting portion can fit the energy compartment frame and obtain a larger fitting area, which is conducive to aligning the beam frame and the energy compartment frame in the second direction.

In some embodiments, the rear compartment includes two rear longitudinal beams and a rear transverse beam connected between the two rear longitudinal beams, where the rear longitudinal beams are provided with the connection portion, and the connection portion is fixedly connected to the energy compartment frame through the connection structure.

By adopting the above technical solution, the rear compartment can abut against and connect to the energy compartment frame through the connection portion on the rear longitudinal beams, reducing the space occupied by the connection portion in the width of the rear compartment.

In some embodiments, the second end of the energy compartment frame is provided with a mounting beam, and the rear transverse beam abuts against the mounting beam along the first direction; and
the vehicle frame further includes a third fastener, where the third fastener runs through the rear transverse beam and the mounting beam along the first direction.

By adopting the above technical solution, the rear compartment and the energy compartment frame are connected simultaneously through the first fastener and the third fastener arranged along the first direction, providing good connection strength.

In some embodiments, both the beam frame and the energy compartment frame are steel components.

By adopting the above technical solution, electrochemical corrosion is not prone to occur at the connection between the beam frame and the energy compartment frame, and at the connection between the vehicle frame and an upper vehicle body, reducing manufacturing costs.

In some embodiments, at least one of the beam frame and the energy compartment frame includes a roll-formed component.

By adopting the above technical solution, the roll-formed component is convenient to manufacture and has low cost, further reducing the manufacturing cost of the vehicle.

According to a second aspect, an embodiment of the present application provides a vehicle body, including:
a battery cell; and
the vehicle frame as provided in the first aspect, where the energy compartment frame in the vehicle frame is configured to accommodate the battery cell to assemble an energy compartment, and the energy compartment is connected to the beam frame.

The above vehicle body includes the vehicle frame provided in the first aspect, which can also solve the problem of assembly gaps. In addition, the battery cell is directly assembled on the energy compartment frame to form the energy compartment, and the energy compartment is connected to the beam frame through the connection structure. Therefore, the energy compartment can be assembled or disassembled relative to the beam frame as an integral structure, which is flexible to use and convenient for maintenance.

According to a third aspect, an embodiment of the present application provides a vehicle body assembly method, including:
providing the energy compartment frame as in the first aspect, fixedly connecting a battery cell to the energy compartment frame to assemble an energy compartment;
abutting the beam frame against an end of the energy compartment frame along a first direction; and
fixedly connecting the energy compartment frame to the beam frame along the first direction using the connection structure.

By adopting the above technical solution, in the vehicle body assembly method provided by embodiments of the present application, the battery cell is fixed in the energy compartment frame to form the energy compartment, and then connects the energy compartment frame to the beam frame, improving the convenience and assembly efficiency of vehicle body assembly. The energy compartment can be provided independently of the beam frame, and the energy compartment can be installed or disassembled relative to the beam frame, improving the maintainability and replaceability of the energy compartment. The vehicle body assembly method provided by embodiments of the present application can be applied to skateboard chassises using CTC structures.

According to a fourth aspect, an embodiment of the present application provides a vehicle, including the vehicle frame as provided in the first aspect or the vehicle body as provided in the second aspect.

The foregoing descriptions are merely an overview of the technical solution of the present application. For a better understanding of the technical means in the present application such that they can be implemented according to the content of the specification, and to make the above and other objectives, features and advantages of the present application more obvious and easier to understand, the following describes specific embodiments of the present application.

### BRIEF DESCRIPTION OF DRAWINGS

To describe the technical solutions in the embodiments of the present application more clearly, the following briefly describes the accompanying drawings required for describing the embodiments or prior technologies. Apparently, the accompanying drawings in the following description show merely some embodiments of the present application, and persons of ordinary skill in the art may still derive other drawings from these accompanying drawings without creative efforts.
FIG. 1 is a schematic assembling diagram of a vehicle frame according to some embodiments of the present application;
FIG. 2 is a partial enlarged view of part A in the vehicle frame shown in FIG. 1;
FIG. 3 is a partial enlarged view of part B in the vehicle frame shown in FIG. 1;
FIG. 4 is a three-dimensional exploded view of the vehicle frame shown in FIG. 1;
FIG. 5 is a schematic three-dimensional diagram of a front compartment in the vehicle frame shown in FIG. 4;
FIG. 6 is a three-dimensional exploded view of an energy compartment frame in the vehicle frame shown in FIG. 4;
FIG. 7 is a three-dimensional exploded view of an energy compartment frame shown in FIG. 6;
FIG. 8 is a schematic three-dimensional diagram of a rear compartment in the vehicle frame shown in FIG. 4;
FIG. 9 is a partial schematic diagram of a front compartment and an energy compartment frame in the vehicle frame shown in FIG. 1;
FIG. 10 is a partial schematic diagram of the connection between a front compartment and an energy compartment frame shown in FIG. 9;
FIG. 11 is a partial schematic diagram of a rear compartment and an energy compartment frame in the vehicle frame shown in FIG. 1;
FIG. 12 is a partial cross-sectional view along line C-C of a rear compartment and an energy compartment frame shown in FIG. 11;
FIG. 13 is a flowchart of a vehicle body assembly method according to some embodiments of the present application; and
FIG. 14 is a schematic simplified diagram of a vehicle according to some embodiments of the present application.

The meanings of the reference numerals in the drawings are:
1. vehicle; 100. vehicle frame;
10. beam frame; 101. connection portion; 102. abutting portion; 11. front compartment; 111. upper longitudinal beam; 112. lower longitudinal beam; 113. vertical beam; 114. front anti-collision beam; 115. calf beam; 12. rear compartment; 121. rear longitudinal beam; 122. rear transverse beam; 123. rear anti-collision beam;
20. energy compartment frame; 201. positioning portion; 202. first connection hole; 203. first end; 204. second end; 21. frame body; 211. first beam body; 212. second beam body; 22. mounting plate; 23. connection block; 24. mounting beam; 25. bottom plate;
30. connection structure; 31. first fastener; 40. second fastener; 50. third fastener;
200. battery; 300. controller; 400. motor;
Z. first direction; X. first direction; and Y. second direction.

### DESCRIPTION OF EMBODIMENTS

The following describes in detail embodiments of technical solutions of the present application with reference to the accompanying drawings. The following embodiments are merely intended for a clearer description of the technical solutions of the present application and therefore are merely used as examples which do not constitute any limitation on the protection scope of the present application.

Unless otherwise defined, all technical and scientific terms used herein shall have the same meanings as commonly understood by persons skilled in the art to which the present application relates. The terms used herein are intended to merely describe the specific embodiments rather than to limit the present application. The terms "include", "comprise", and "have" and any other variations thereof in the specification, claims and brief description of drawings of the present application are intended to cover non-exclusive inclusions.

In the descriptions of the embodiments of the present application, the technical terms "first", "second", and the like are merely intended to distinguish between different objects, and shall not be understood as any indication or implication of relative importance or any implicit indication of the number, specific sequence, or primary-secondary relationship of the technical features indicated. In the description of the embodiments of the present application, "a plurality of" means at least two unless otherwise specifically defined.

In this specification, reference to "embodiment" means that specific features, structures, or characteristics described with reference to the embodiment may be included in at least one embodiment of the present application. The word "embodiment" appearing in various places in the specification does not necessarily refer to the same embodiment or an independent or alternative embodiment that is exclusive of other embodiments. It is explicitly or implicitly understood by persons skilled in the art the embodiments described herein may be combined with other embodiments.

In the description of some embodiments of the present application, the term "and/or" is only an associative relationship for describing associated objects, indicating that three relationships may be present. For example, A and/or B may indicate the following three cases: presence of only A, presence of both A and B, and presence of only B. In addition, the character "/" in this specification generally indicates an "or" relationship between contextually associated objects.

In the descriptions of the embodiments of the present application, the term "a plurality of" means more than two (inclusive). Similarly, " a plurality of groups" means more than two (inclusive) groups, and " a plurality of pieces" means more than two (inclusive) pieces.

In the description of the embodiments of the present application, the orientations or positional relationships indicated by the technical terms "center", "longitudinal", "transverse", "length", "width", "thickness", "upper", "lower", "front", "rear", "vertical", "horizontal", "top", "bottom", "inside", "outside", are based on the orientations or positional relationships as shown in the accompanying drawings. These terms are merely for ease and brevity of description of the embodiments of the present application rather than indicating or implying that the means or components mentioned must have specific orientations or must be constructed or manipulated according to specific orientations, and therefore shall not be construed as any limitation on the embodiments of the present application.

In the description of the embodiments of the present application, unless otherwise specified and defined explicitly, the terms "mounting", "connection", "join", and "fastening" should be understood in their general senses. For example, they may refer to a fixed connection, a detachable connection, or an integral connection, may refer to a mechanical connection or electrical connection, and may refer to a direct connection, an indirect connection via an intermediate medium, an internal communication between two elements, or an interaction between two elements. Persons of ordinary skills in the art can understand specific meanings of these terms in the present application as appropriate to specific situations.

In the present application, a battery cell may include a lithium-ion secondary battery cell, a lithium-ion primary battery cell, a lithium-sulfur battery cell, a sodium-lithium-ion battery cell, a sodium-ion battery cell, a magnesium-ion battery cell, or the like. This is not limited in the embodiments of the present application. The battery cell may be cylindrical, flat, rectangular, or of other shapes, which is not limited in the embodiments of the present application either. Battery cells are generally divided into three types by packaging method: cylindrical battery cell, prismatic battery cell, and pouch battery cell. This is not limited in the embodiments of the present application either.

The battery mentioned in the embodiments of the present application is a single physical module that includes one or more battery cells for providing a higher voltage and capacity. For example, the battery mentioned in the present application may include a battery module, a battery pack, or the like.

The technical solution described in the embodiments of the present application is applicable to a vehicle. The vehicle may be a fossil fuel vehicle, a natural gas vehicle, or a new energy vehicle. The new energy vehicle may be a battery electric vehicle, a hybrid electric vehicle, a range-extended electric vehicle, or the like. The above vehicle is not particularly limited in this embodiment of the present application.

Currently, a lower vehicle frame structure of the new energy vehicle generally includes components such as a vehicle frame and a battery. However, during the assembly process of the vehicle frame, problems such as assembly gaps between components are prone to occur, resulting in difficulties in vehicle frame assembly.

In view of this, the present application designs a vehicle frame, a vehicle body, a vehicle body assembly method, and a vehicle. The vehicle frame includes: a beam frame, an energy compartment frame, and a connection structure. The beam frame is configured to install a suspension, the energy compartment frame is configured to accommodate a battery, and the beam frame abuts against an end of an energy compartment along a first direction, where the first direction is a vehicle height direction; and the connection structure is configured to fixedly connect the energy compartment to the beam frame along the first direction. In the vehicle frame provided by the present application, an assembly direction of the beam frame and the energy compartment frame is the same as a connection direction of the connection structure, and assembly gaps are not prone to occur between the beam frame and the energy compartment frame. The beam frame falls onto an upper portion of the energy compartment frame along the first direction so as to achieve the abutment between the beam frame and the energy compartment frame, and the assembly process is relatively simple. The above vehicle frame is not prone to assembly gaps, thereby improving installation accuracy, and solving the problem of vehicle frame assembly difficulties caused by assembly gaps.

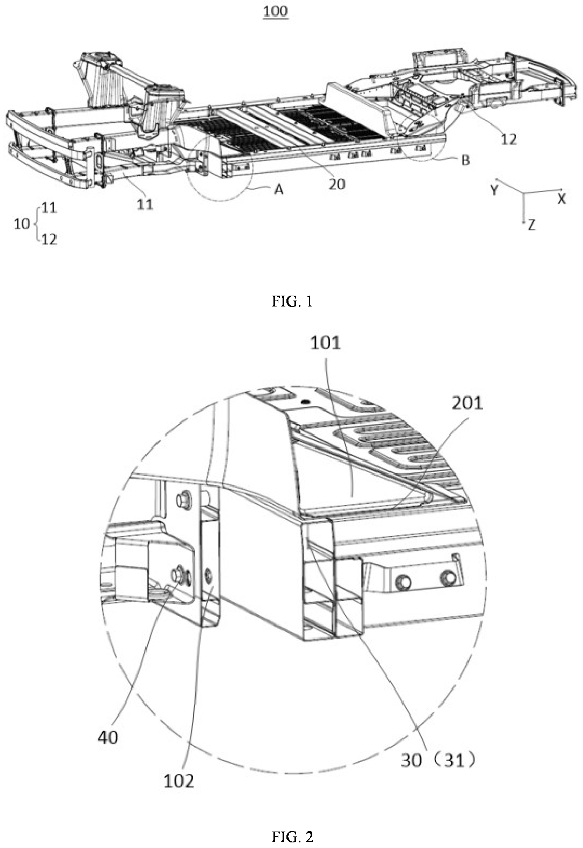

According to a first aspect, an embodiment of the present application provides a vehicle frame. Referring to FIGs. 1 to 3, the vehicle frame 100 includes a beam frame 10, an energy compartment frame 20, and a connection structure 30. The beam frame 10 is configured to install a suspension, and the beam frame 10 abuts against an end of the energy compartment frame 20 along a first direction Z, where the first direction Z is a vehicle height direction; and the connection structure 30 is configured to fixedly connect the energy compartment to the beam frame 10 along the first direction Z.

The beam frame 10 is configured to install a suspension. The suspension, also known as the suspension system, is an assembly of a connection mechanism between the wheels and the vehicle body, and generally includes springs, shock absorbers, swing arms, and other components. The vehicle body is supported on the wheels through the suspension, and the suspension is configured to control the bouncing of the wheels so that the vehicle can travel smoothly. The beam frame 10 is disposed on at least one side of the energy compartment frame 20 along a second direction X, and the second direction X intersects with the first direction Z.

In some embodiments, the second direction X is perpendicular to the first direction Z.

In some embodiments, the second direction X may be the vehicle traveling direction, and the vehicle traveling direction includes forward and backward directions.

The energy compartment frame 20 is substantially a frame structure, and the energy compartment frame 20 is configured to accommodate a plurality of battery cells to form an energy compartment together with the battery cells. The beam frame 10 abuts against the end of the energy compartment frame 20 along the first direction Z, and the first direction Z is the vehicle height direction. In some embodiments, the beam frame 10 abuts against an upper portion of the energy compartment frame 20. In other embodiments, the beam frame 10 may also abut against a lower portion of the energy compartment frame 20.

The connection structure 30 is configured to fixedly connect the energy compartment frame 20 to the beam frame 10 along the first direction Z, so that an assembly direction of the beam frame 10 and the energy compartment frame 20 is the same as a connection direction of the connection structure 30. The connection structure 30 may include fasteners such as bolts, or other connection members such as riveting studs.

During assembly, the beam frame 10 is first abutted against the end of the energy compartment frame 20 along the first direction Z, and then the energy compartment frame 20 and the beam frame 10 are fixedly connected along the first direction Z through the connection structure 30 to assemble the vehicle frame 100.

In the vehicle frame 100 provided by the present application, the assembly direction of the beam frame 10 and the energy compartment frame 20 is the same as the connection direction of the connection structure 30, and assembly gaps are not prone to occur between the beam frame 10 and the energy compartment frame 20. The beam frame 10 falls onto the end of the energy compartment frame 20 along the first direction Z or the end of the energy compartment frame 20 falls onto the beam frame 10 along the first direction Z so as to achieve the abutment between the beam frame 10 and the energy compartment frame 20, thereby aligning the beam frame 10 and the energy compartment frame 20 in the first direction Z, resulting in a relatively simple assembly process. The above vehicle frame 100 is not prone to assembly gaps, thereby improving installation accuracy, and solving the problems of vehicle frame assembly difficulties and upper and lower vehicle body assembly difficulties caused by assembly gaps.

Still referring to FIGs. 1 to 3, in some embodiments, an end of the energy compartment frame 20 along the second direction X is provided with a positioning portion 201, and the beam frame 10 abuts against the positioning portion 201 along the first direction Z, where the second direction X is the vehicle traveling direction; and the connection structure 30 includes a first fastener 31, the first fastener 31 running through the beam frame 10 and the positioning portion 201 along the first direction Z.

The energy compartment frame 20 and the beam frame 10 are arranged along the second direction X, and the end of the energy compartment frame 20 along the second direction X is provided with a positioning portion 201 for connecting the beam frame 10. Specifically, the beam frame 10 abuts against and fits the positioning portion 201 along the first direction Z, so that assembly gaps are not prone to occur between the beam frame 10 and the positioning portion 201. The connection structure 30 includes one or more first fasteners 31. In some embodiments, the first fastener 31 is a bolt, and a screwing direction of the first fastener 31 is the same as the assembly direction of the vehicle frame, where both the directions are the first direction Z. In other embodiments, the first fastener 31 may also be a screw or other fastening connection member.

In some embodiments, the beam frame 10 includes a front compartment 11 and a rear compartment 12 respectively disposed on two sides of the energy compartment frame 20 along the second direction X, and two ends of the energy compartment frame 20 along the second direction X are provided with positioning portions 201, so that two ends of the energy compartment frame 20 are respectively connected to the front compartment 11 and the rear compartment 12 through the positioning portions 201 and the connection structure 30. In other embodiments, the beam frame 10 may also be disposed at one end of the energy compartment frame 20 along the second direction X, and then a positioning portion 201 is provided at the end of the energy compartment frame 20 facing the beam frame 10.

By adopting the above technical solution, the end of the energy compartment frame 20 is provided with the positioning portion 201, and the beam frame 10 abuts against the positioning portion 201 along the first direction Z, such that assembly gaps are not prone to occur between the beam frame 10 and the energy compartment frame 20; the first fastener 31 runs through the beam frame 10 and the positioning portion 201 along the first direction Z, so that the first fastener 31 can assemble or disassemble the energy compartment frame 20 and the beam frame 10 along the first direction Z. The above vehicle frame 100 does not need to be provided with fasteners arranged along a vehicle body width direction (a third direction Y), solving the problem that assembly gaps are prone to occur between the energy compartment frame 20 and the beam frame 10 in the vehicle body width direction.

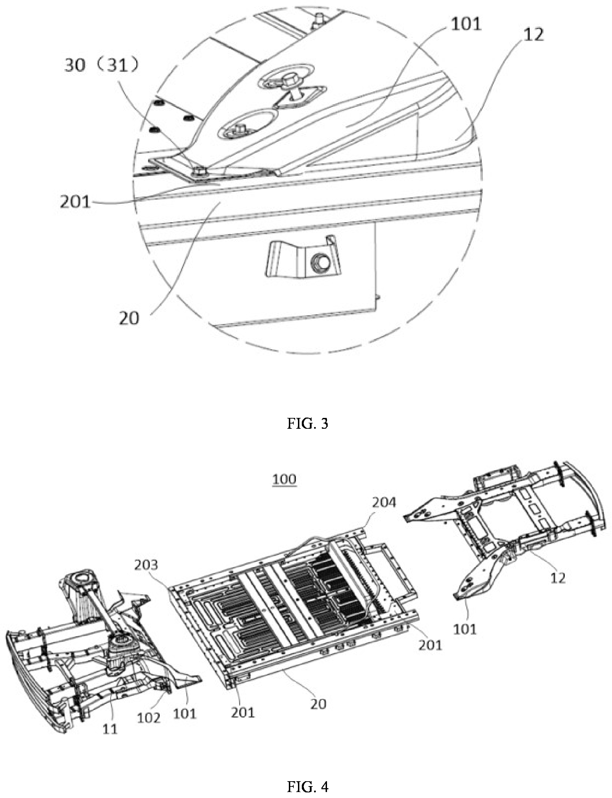

Referring to FIGs. 1 and 4, in some embodiments, the beam frame 10 is provided with a connection portion 101 extending along the second direction X; and the connection portion 101 abuts against and fits the positioning portion 201 along the first direction Z, the first fastener 31 running through the connection portion 101 and the positioning portion 201 along the first direction Z.

The beam frame 10 is provided with a connection portion 101 extending along the second direction X, that is, the connection portion 101 extends in a direction facing the energy compartment frame 20 to facilitate the connection to the positioning portion 201. As shown in FIG. 4, the front compartment 11 and the rear compartment 12 in the beam frame 10 are each provided with two spaced connection portions 101. It can be understood that one or more connection portions 101 may also be provided. The connection portion 101 may be box-shaped, frame-shaped, flat plate-shaped, and the like, or of irregular shapes.

In some embodiments, the connection portion 101 is disposed on a side portion of the beam frame 10 along the third direction Y. In other embodiments, the connection portion 101 may also be disposed on a middle portion of the beam frame 10 along the third direction Y. It can be understood that the positioning portion 201 is correspondingly disposed with the connection portion 101.

By providing the connection portion 101 extending along the second direction X on the beam frame 10, it is convenient for the connection portion 101 to lap against the positioning portion 201, facilitating the beam frame 10 to abut against and fit the positioning portion 201.

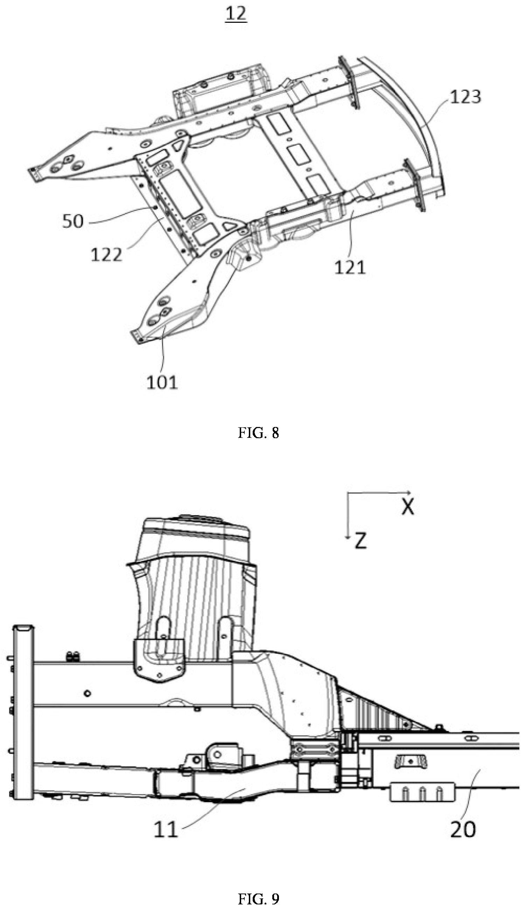

Referring to FIGs. 4 to 8, in some embodiments, surfaces of the positioning portion 201 and the connection portion 101 that abut against each other are both planar.

Specifically, the surface of the positioning portion 201 facing the connection portion 101 and the surface of the connection portion 101 facing the positioning portion 201 are both planar, so that the positioning portion 201 and the connection portion 101 are tightly fitted, further reducing the probability of assembly gaps occurring between the beam frame 10 and the energy compartment frame 20.

In other embodiments, the surfaces of the positioning portion 201 and the connection portion 101 that abut against each other may also be non-planar. For example, the surface of the positioning portion 201 facing the connection portion 101 is provided with a protrusion, and the surface of the connection portion 101 facing the positioning portion 201 is provided with a recess adapted to the protrusion, so that the protrusion and the recess can achieve positioning, and the remaining regions of the positioning portion 201 and the connection portion 101 can still maintain fitting.

In some embodiments, the beam frame 10 is provided with at least two connection portions 101, where two of the connection portions 101 are spaced apart along the third direction Y, the third direction Y being perpendicular to the first direction Z and the second direction X; and the energy compartment frame 20 is provided with at least two positioning portions 201, where two of the positioning portions 201 are spaced apart along the third direction Y, and the connection portions 101 are connected to the positioning portions 201 in a one-to-one correspondence.

Specifically, the beam frame 10 includes a front compartment 11 and a rear compartment 12, and at least one of the front compartment 11 and the rear compartment 12 is provided with two connection portions 101 spaced apart along the third direction Y, and each connection portion 101 extends along the second direction X toward the energy compartment frame 20. Two ends of the energy compartment frame 20 along the second direction X are respectively provided with two positioning portions 201, and the connection portions 101 are connected to the positioning portions 201 in a one-to-one correspondence. The third direction Y may be the vehicle body width direction.

By providing at least two connection portions 101 spaced apart along the third direction Y on the beam frame 10, each connection portion 101 can be connected to a corresponding positioning portion 201 along the first direction Z, improving the connection strength between the beam frame 10 and the energy compartment frame 20, and the vehicle frame 100 exhibiting good structural stability.

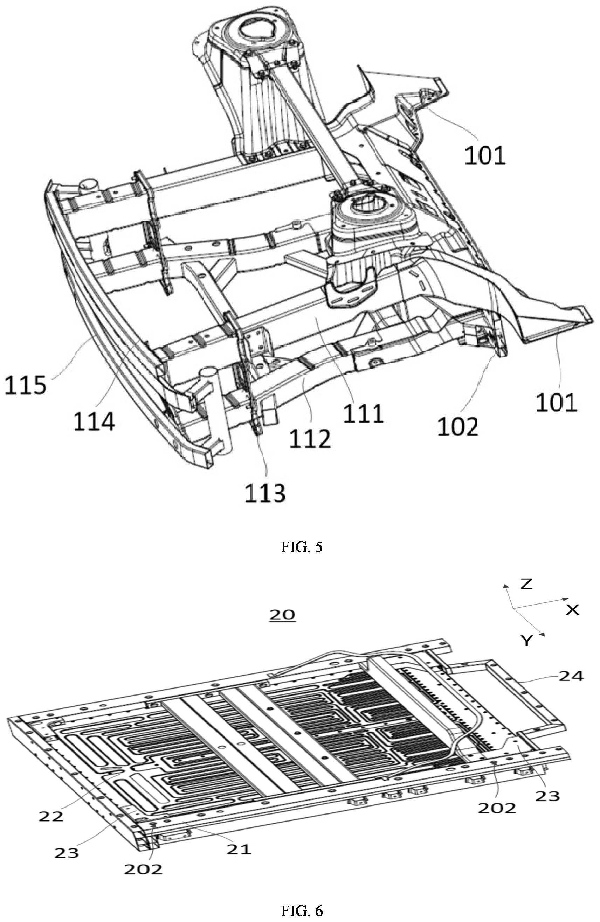

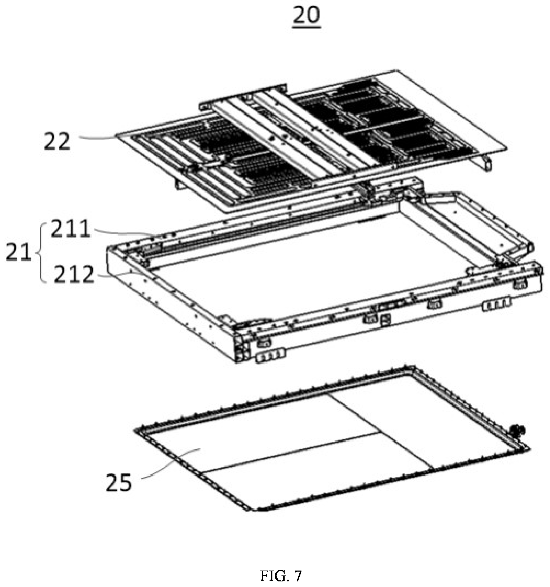

As shown in FIGs. 6 and 7, in some embodiments, the positioning portion 201 is disposed at a corner of the energy compartment frame 20. The energy compartment frame 20 includes a frame body 21, a mounting plate 22 disposed in the frame body 21, and a connection block 23 disposed at a corner of the frame body 21, where the mounting plate 22 is configured to connect a plurality of battery cells; and the corner of the frame body 21 and the connection block 23 together form the positioning portion 201, and at least one of the frame body 21 and the connection block 23 is provided with a first connection hole 202 for installing the first fastener 31.

Optionally, the energy compartment frame 20 is a square frame structure, and all four corners of the energy compartment frame 20 are provided with positioning portions 201, that is, all four corners of the energy compartment frame 20 are connected to the beam frame 10 through the positioning portions 201.

The energy compartment frame 20 includes a frame body 21, a mounting plate 22 disposed in the frame body 21, and a connection block 23 disposed at a corner of the frame body 21. The frame body 21 includes two first beam bodies 211 extending along the second direction X and two second beam bodies 212 extending along the third direction Y, and the two first beam bodies 211 and the two second beam bodies 212 together enclose a hollow frame body 21. The mounting plate 22 is fixed in the frame body 21 and configured to fixedly connect the battery cell. Optionally, the battery cell is adhered to the mounting plate 22 through adhesive. Optionally, an energy compartment frame body 21 further includes a bottom plate 25, where the bottom plate 25 is connected to the frame body 21 and oppositely disposed with the mounting plate 22 along the first direction Z, and the battery cell is disposed between the bottom plate 25 and the mounting plate 22.

The connection block 23 may be an L-shaped block structure to facilitate fixing to the corner of the frame body 21. The connection block 23 is disposed on a side of the mounting plate 22 facing away from the battery.

The corner of the frame body 21 and the connection block 23 together form the positioning portion 201. Optionally, the corner of the frame body 21 is flush with a top surface of the connection block 23 to make the surface of the positioning portion 201 planar, facilitating the fitting of the positioning portion 201 to the connection portion 101.

At least one of the frame body 21 and the connection block 23 is provided with a first connection hole 202 for installing the first fastener 31. For example, as shown in FIG. 6, the frame body 21 and the connection block 23 are respectively provided with a first connection hole 202, so that both the frame body 21 and the connection block 23 can be fixedly connected to the beam frame 10 through the first fastener 31.

The energy compartment frame 20 provided by the embodiments of the present application can fix the battery cell, and the energy compartment frame 20 is provided with the positioning portion 201 at its corner, which facilitates the connection of the energy compartment frame 20 to the beam frame 10 through the connection structure 30 and is not prone to interference with the battery cell.

Referring to FIGs. 2, 5, 9, and 10, in some embodiments, the beam frame 10 is further provided with an abutting portion 102, the abutting portion 102 and the energy compartment frame 20 are both disposed on the same side of the connection portion 101 along the first direction Z, and the abutting portion 102 abuts against the energy compartment frame 20 along the second direction X.

Optionally, the abutting portion 102 is disposed on the front compartment 11. It can be understood that the abutting portion 102 may also be disposed on the rear compartment 12. The abutting portion 102 and the energy compartment frame 20 are both disposed on the same side of the connection portion 101 along the first direction Z. For example, in some embodiments, the abutting portion 102 and the energy compartment frame 20 are both disposed below the connection portion 101.

Since the beam frame 10 and the energy compartment frame 20 are arranged along the second direction X, the abutting portion 102 abuts against the energy compartment frame 20 along the second direction X, alignment of the beam frame 10 and the energy compartment frame 20 in the second direction X can be achieved, and assembly gaps are not prone to occur between the beam frame 10 and the energy compartment frame 20 in the second direction X.

In some embodiments, the vehicle frame 100 further includes a second fastener 40, and the second fastener 40 runs through the abutting portion 102 and the energy compartment frame 20 along the second direction X.

The second fastener 40 is a bolt. In other embodiments, the second fastener 40 may also be other connection members. The second fastener 40 runs through the abutting portion 102 and the energy compartment frame 20 along the second direction X, so that the second fastener 40 can be fixedly connected to the abutting portion 102 and the energy compartment frame 20 in the second direction X, improving the connection strength between the beam frame 10 and the energy compartment frame 20, and the vehicle frame 100 exhibiting good structural stability. When the vehicle encounters a collision, the connection between the beam frame 10 and the energy compartment frame 20 is not prone to warping or deformation.

When assembling the front compartment 11 and the energy compartment frame 20, one end of the front compartment 11 is first placed on the energy compartment frame 20 so that the abutting portion 102 abuts against the energy compartment frame 20, and the second fastener 40 runs through the abutting portion 102 and the energy compartment frame 20 along the second direction X, so that installation gaps are not prone to occur in the second direction X; and then, the first fastener 31 is tightened along the first direction Z to achieve fixed connection between the front compartment 11 and the energy compartment frame 20. The assembly connection method of the above vehicle frame 100 is mainly in the first direction Z and auxiliary in the second direction X, further improving assembly accuracy.

Referring to FIGs. 6, 7, and 10, in some embodiments, the energy compartment frame 20 is provided therein with an accommodation space for accommodating the battery cell, and the connection structure 30 and the second fastener 40 are both disposed outside the accommodation space.

In some embodiments, the first beam body 211 or the second beam body 212 is provided therein with a space for the first fastener 31 and the second fastener 40 to run through, and the first fastener 31 and the second fastener 40 do not penetrate the first beam body 211, so the first fastener 31 and the second fastener 40 do not extend into the accommodation space of the energy compartment frame 20. For example, the first beam body 211 close to the front compartment 11 is provided therein with a space for the first fastener 31 and the second fastener 40 to run through, and the second beam body 212 close to the rear compartment 12 is provided therein with a space for the second fastener 40 to run through.

By adopting the above technical solution, neither the connection structure 30 nor the second fastener 40 enters the accommodation space for the battery cell, so the assembly of the battery cell with the energy compartment frame 20 is not affected, improving the structural compactness of the energy compartment and the vehicle frame 100.

Referring to FIGs. 1 to 4, in some embodiments, the beam frame 10 includes a front compartment 11 and a rear compartment 12; the energy compartment frame 20 includes a first end 203 and a second end 204 oppositely disposed along the second direction X, the first end 203 being connected to the front compartment 11, and the second end 204 being connected to the rear compartment 12; where the front compartment 11 abuts against the first end 203 along the first direction Z; and/or the rear compartment 12 abuts against the second end 204 along the first direction Z.

The vehicle frame 100 provided by embodiments of the present application has a three-segment splicing structure, and the energy compartment frame 20 is disposed between the front compartment 11 and the rear compartment 12 along a vehicle body traveling direction, and the front compartment 11 and the rear compartment 12 can each mount a suspension.

In some embodiments, the front compartment 11 abuts against the first end 203 along the first direction Z, and the front compartment 11 is connected to the energy compartment frame 20 through the first fastener 31 arranged along the first direction Z; and the rear compartment 12 abuts against the second end 204 along the first direction Z, and the rear compartment 12 is connected to the energy compartment frame 20 through the first fastener 31 arranged along the first direction Z. In other embodiments, only one of the front compartment 11 and the rear compartment 12 may be connected to the energy compartment frame 20 through the first fastener 31.

The vehicle frame 100 provided by embodiments of the present application is a three-segment structure, which can meet the needs of upper and lower vehicle body assembly; and the front compartment 11 and/or rear compartment 12 can abut against the energy compartment frame 20, so that assembly gaps are not prone to occur between the front compartment 11 and/or rear compartment 12 and the energy compartment frame 20.

In some embodiments, the abutting portion 102 is disposed at an end of the front compartment 11 close to the energy compartment frame 20; and/or the abutting portion 102 is disposed at an end of the rear compartment 12 close to the energy compartment frame 20.

As shown in FIGs. 4 and 5, in some embodiments, the abutting portion 102 is disposed at the end of the front compartment 11 close to the energy compartment frame 20, and the second fastener 40 connects the abutting portion 102 and the energy compartment frame 20. In this way, when a collision occurs at the front of the vehicle, the connection between the front compartment 11 and the energy compartment frame 20 is not prone to warping or deformation.

It can be understood that an end of the rear compartment 12 close to the energy compartment frame 20 may also be provided with the abutting portion 102. In addition, since the rear compartment 12 can absorb the energy of a collision at the rear of the vehicle, the abutting portion 102 on the rear compartment 12 may also be omitted.

Referring to FIGs. 1 and 5, in some embodiments, the front compartment 11 further includes an upper longitudinal beam 111 and a lower longitudinal beam 112 distributed along the first direction Z, and a vertical beam 113 connected between the upper longitudinal beam 111 and the lower longitudinal beam 112, where the connection portion 101 is connected to the upper longitudinal beam 111, and the abutting portion 102 is connected to the lower longitudinal beam 112.

The upper longitudinal beam 111 is disposed above the lower longitudinal beam 112, and an extension direction of the upper longitudinal beam 111 and the lower longitudinal beam 112 may be the second direction X or form a certain angle with the second direction X. The vertical beam 113 is connected between a pair of upper longitudinal beam 111 and lower longitudinal beam 112, and the vertical beam 113 may extend along the first direction Z or be inclined with respect to the first direction Z. The connection portion 101 is connected to an end of the upper longitudinal beam 111 close to the energy compartment frame 20, and the abutting portion 102 is connected to an end of the lower longitudinal beam 112 close to the energy compartment frame 20, so that the connection portion 101 is disposed above the abutting portion 102.

Optionally, two upper longitudinal beams 111 are provided and are spaced apart along the third direction Y; and two lower longitudinal beams 112 are provided and are also spaced apart along the third direction Y.

Optionally, the front compartment 11 further includes a front anti-collision beam 114 connected between a pair of upper longitudinal beams, and a calf beam 115 connected between a pair of lower longitudinal beams, where the calf beam 115 may also be called a pedestrian protection anti-collision beam or an anti-pedestrian entrapment apparatus, which can protect pedestrians outside the vehicle.

Optionally, energy-absorbing boxes may be provided on both the upper longitudinal beam 111 and the lower longitudinal beam 112.

The front compartment 11 provided by embodiments of the present application has an upper and lower two-layer longitudinal beam structure, improving structural strength. In addition, the connection portion 101 is connected to the upper longitudinal beam 111, and the abutting portion 102 is connected to the lower longitudinal beam 112, achieving the connection portion 101 falling on an upper portion of the energy compartment frame 20 along the first direction Z, and achieving the abutting portion 102 abutting against a side portion of the energy compartment frame 20 along the second direction X. The structure of the above front compartment 11 is ingenious and practical, and the connection portion 101 and the abutting portion 102 do not interfere with each other.

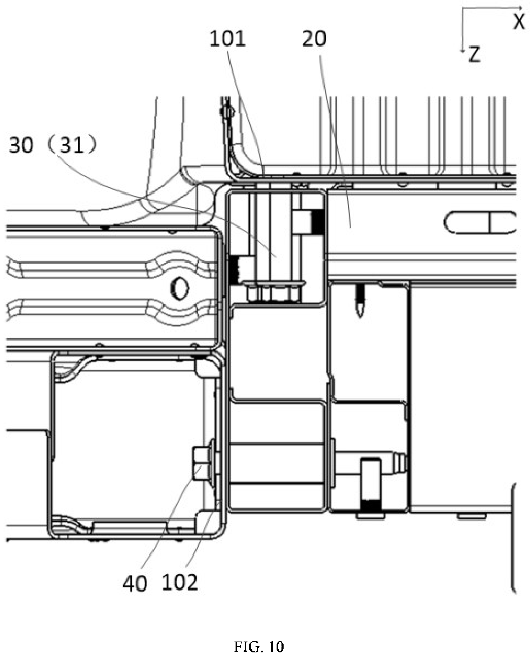

As shown in FIG. 10, in some embodiments, a surface of the abutting portion 102 facing the energy compartment frame 20 and a surface of the energy compartment frame 20 facing the abutting portion 102 are both planes parallel to the first direction Z.

By adopting the above technical solution, the abutting portion 102 can fit the energy compartment frame 20 and obtain a larger fitting area, which is conducive to aligning the beam frame 10 and the energy compartment frame 20 in the second direction X.

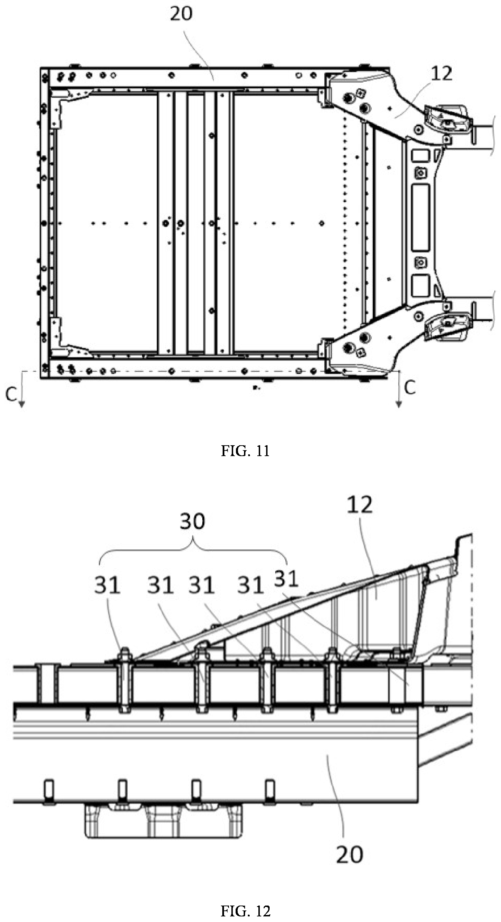

Referring to FIGs. 4, 8, 11, and 12, in some embodiments, the rear compartment 12 includes two rear longitudinal beams 121 and a rear transverse beam 122 connected between the two rear longitudinal beams 121, where the rear longitudinal beams 121 are provided with the connection portion 101; and the connection portion 101 on the rear longitudinal beams 121 is fixedly connected to the energy compartment frame 20 through the connection structure 30.

Optionally, the two rear longitudinal beams 121 are each provided with a connection portion 101, and each connection portion 101 is fixedly connected to the energy compartment frame 20 through a first fastener 31. Optionally, the first fastener 31 runs through the connection portion 101 and the first beam body 211 of the energy compartment frame 20. Optionally, each connection portion 101 is fixedly connected to the energy compartment frame 20 through a plurality of first fasteners 31, and the plurality of first fasteners may be spaced apart along the second direction X to improve connection strength and structural stability.

By adopting the above technical solution, the rear compartment 12 can abut against and connect to the energy compartment frame 20 through the connection portion 101 on the rear longitudinal beams 121, reducing the space occupied by the connection portion 101 in the width of the rear compartment 12.

In some embodiments, the second end 204 of the energy compartment frame 20 is provided with a mounting beam 24, and the rear transverse beam 122 abuts against the mounting beam 24 along the first direction Z; and the vehicle frame 100 further includes a third fastener 50, where the third fastener 50 runs through the rear transverse beam 122 and the mounting beam 24 along the first direction Z.

The third fastener 50 may be a bolt or other connection members. A plurality of third fasteners 50 may be provided, and the plurality of third fasteners 50 are spaced apart along the mounting beam 24.

By adopting the above technical solution, the rear compartment 12 and the energy compartment frame 20 are connected simultaneously through the first fastener 31 and the third fastener 50 arranged along the first direction Z, providing good connection strength.

In some embodiments, both the beam frame 10 and the energy compartment frame 20 are steel components.

Specifically, the front compartment 11, the rear compartment 12, and the energy compartment frame 20 are all steel components, that is, the front compartment 11, the rear compartment 12, and the energy compartment frame 20 are made of steel materials. In some cases, the material of local structures of the beam frame 10 and/or the energy compartment frame 20 is aluminum, and electrochemical corrosion problems occur when the vehicle frame is spliced with the steel upper vehicle body, so special treatment is required for the steel-aluminum connection regions, increasing the per-vehicle cost.

The beam frame 10 and the energy compartment frame 20 provided by embodiments of the present application are both steel components, and electrochemical corrosion is not prone to occur at the connection between the beam frame 10 and the energy compartment frame 20, and at the connection between the vehicle frame 100 and the upper vehicle body, reducing manufacturing costs.

In some embodiments, at least one of the beam frame 10 and the energy compartment frame 20 includes a roll-formed component.

Referring to FIGs. 1 to 12, both the beam frame 10 and the energy compartment frame 20 are steel components, and both the beam frame 10 and the energy compartment frame 20 may include roll-formed components. Optionally, one or more of the upper longitudinal beam 111, the lower longitudinal beam 112, the rear transverse beam 122, the rear longitudinal beam 121, the first beam body 211, and the second beam body 212 are roll-formed components.

By adopting the above technical solution, the roll-formed component is convenient to manufacture and has low cost, further reducing the manufacturing cost of the vehicle.

In some embodiments, the vehicle frame 100 includes a beam frame 10, an energy compartment frame 20, and a connection structure 30. The beam frame 10 includes a front compartment 11 and a rear compartment 12. The energy compartment frame 20 includes a first end 203 and a second end 204 oppositely disposed along the second direction X, and both the first end 203 and the second end 204 are provided with positioning portions 201, where the front compartment 11 abuts against the positioning portion 201 on the first end 203 along the first direction Z, and the rear compartment 12 abuts against the positioning portion 201 on the second end 204 along the second direction X. The connection structure 30 includes a first fastener 31 arranged along the first direction Z, the front compartment 11 and the positioning portion 201 on the first end 203 are fixedly connected through the first fastener 31, and the rear compartment 12 and the positioning portion 201 on the second end 204 are fixedly connected through a second fastener 40.

In some embodiments, the front compartment 11 is further provided with an abutting portion 102, and the abutting portion 102 abuts against the energy compartment frame 20 and is fixedly connected to the energy compartment frame 20 through a second fastener 40 arranged along the second direction X.

In the vehicle frame 100 provided by the embodiments of the present application, the front compartment 11 and the rear compartment 12 respectively abut against two ends of the energy compartment frame 20 along the first direction Z, and fixed connection is achieved through the first fastener 31 arranged along the first direction Z, so the assembly direction between the front compartment 11 and the energy compartment frame 20, and the assembly direction between the rear compartment 12 and the energy compartment frame 20 is the same as the connection manner of the connection structure 30, assembly gaps are not prone to occur, improving the dimensional accuracy and assembly accuracy of the vehicle frame 100.

According to a second aspect, an embodiment of the present application provides a vehicle body, including a battery cell and the vehicle frame 100 as provided in the first aspect, where the energy compartment frame 20 in the vehicle frame 100 is configured to accommodate the battery cell to assemble an energy compartment, and the energy compartment is connected to the beam frame 10.

In the vehicle body, one or more battery cells may be provided. When a plurality of battery cells are provided, the plurality of battery cells together form a battery; the plurality of battery cells may be connected in series, parallel, or series-parallel, where being connected in series-parallel means a combination of series and parallel connections of the plurality of battery cells.

The vehicle body provided by the embodiments of the present application includes the vehicle frame 100 and a battery cell, the vehicle frame 100 including a beam frame 10 and an energy compartment frame 20, where the energy compartment frame 20 and the battery cell therein form an energy compartment, and the energy compartment is connected to the beam frame 10, that is, the energy compartment is connected to the beam frame 10 through the connection structure 30. The above vehicle body includes the vehicle frame 100 provided in the first aspect, which can also solve the problem of assembly gaps. In addition, the battery cell is directly assembled on the energy compartment frame 20 to form the energy compartment, and the energy compartment is connected to the beam frame 10 through the connection structure 30. Therefore, the energy compartment can be assembled or disassembled relative to the beam frame 10 as an integral structure, which is flexible to use and convenient for maintenance.

Referring to FIGs. 1 to 13, according to a third aspect, an embodiment of the present application provides a vehicle body assembly method, including:
Step S1: fixedly connect a battery cell to an energy compartment frame 20 to assemble an energy compartment.

Specifically, the vehicle frame 100 provided in the first aspect is provided, where the energy compartment frame 20 and the beam frame 10 are not yet connected.

In some embodiments, a plurality of battery cells may be directly fixed to the energy compartment frame 20 for use as a battery, without first assembling the battery cells into a battery pack and then fixing the battery pack to the energy compartment frame 20. It can be understood that in other embodiments, a plurality of battery cells may also be first assembled into a battery module and then the battery module is fixedly connected to the energy compartment frame 20.

In some embodiments, the battery cell is first adhered to the mounting plate 22 of the energy compartment frame 20 through adhesive, and then the bottom plate 25 is fixedly connected to the energy compartment frame 20, at this time, the battery cell is located in the accommodation space enclosed by the frame body 21, the mounting plate 22, and the bottom plate 25. By first fixedly connecting the battery cell to the energy compartment frame 20, the operating space required for assembling the energy compartment is small, and the assembly is more convenient.

Step S2: abut the beam frame 10 against an end of the energy compartment frame 20 along a first direction Z.

The beam frame 10 can directly fall onto the end of the energy compartment frame 20, so that the beam frame 10 abuts against and fits the energy compartment frame 20. The beam frame 10 may include a front compartment 11 and a rear compartment 12, then the front compartment 11 abuts against a first end 203 of the energy compartment frame 20, and the rear compartment 12 abuts against a second end 204 of the energy compartment frame 20.

Step S3: fixedly connect the energy compartment frame 20 to the beam frame 10 along the first direction Z using the connection structure 30.

The front compartment 11 and the rear compartment 12 of the beam frame 10 are respectively connected to two ends of the energy compartment frame 20 through the connection structure 30.

In the vehicle body assembly method provided by the embodiments of the present application, the battery cell is fixedly connected to the energy compartment frame 20 to form an energy compartment, and then the energy compartment is connected to the beam frame 10, improving the convenience and assembly efficiency of vehicle body. The energy compartment can be provided independently of the beam frame 10, and the energy compartment can be installed or disassembled relative to the beam frame 10, improving the maintainability and replaceability of the energy compartment. The vehicle body assembly method provided by embodiments of the present application can be applied to skateboard chassises using CTC structures, where CTC refers to Cell to Chassis, that is, cells (cell) are integrated into the vehicle body (Chassis). Compared with the method of first assembling the energy compartment frame 20, the front compartment 11, and the rear compartment 12 into a vehicle frame, and then assembling the battery to the vehicle frame, the vehicle body assembly method provided by the present application does not require turning over the entire vehicle frame to install the battery cell, the method requires a small operating space, improving the convenience of assembling the battery.

According to a fourth aspect, an embodiment of the present application provides a vehicle, including the vehicle frame as provided in the first aspect.

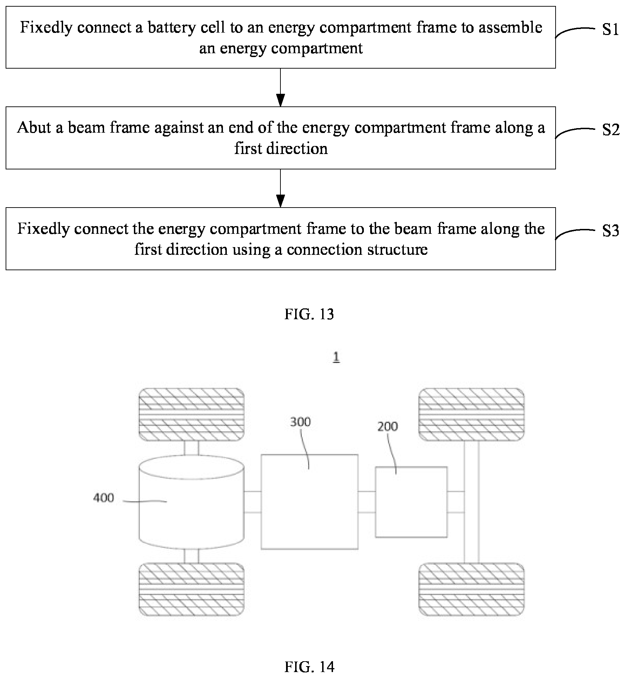

FIG. 14 is a schematic simplified diagram of a vehicle 1 according to some embodiments of the present application. As shown in FIG. 14, the vehicle 1 is provided with a battery 200 inside, and the battery 200 may be disposed in the energy compartment frame of the vehicle 1. The battery 200 may be configured to supply power to the vehicle 1. For example, the battery 200 may be used as an operational power source for the vehicle 1. The vehicle 1 may further include a controller 300 and a motor 400, where the controller 300 is configured to control the battery 200 to supply power to the motor 400, for example, to satisfy power needs of start, navigation, and driving of the vehicle 1. In some embodiments of the present application, the battery 200 can be used as not only the operational power supply for the vehicle 1 but also a driving power supply for the vehicle 1, replacing all or part of the fossil fuel or the natural gas to provide driving power for the vehicle 1.

It should be noted that the above embodiments are merely intended for describing the technical solutions of the present application but not for limiting the present application. Although the present application is described in detail with reference to the foregoing embodiments, persons of ordinary skill in the art should understand that they may still make modifications to the technical solutions described in the foregoing embodiments or make equivalent replacements to some technical features therein, and these modifications or substitutions do not make the essence of the corresponding technical solutions depart from the scope of the technical solutions of some embodiments of the present application, and all should be included within the protection scope of the present application.

## Claims

1. A vehicle frame, disposed in a vehicle, **characterized in that** the vehicle frame comprises:
a beam frame, configured to install a suspension;
an energy compartment frame, wherein the beam frame abuts against an end of the energy compartment frame along a first direction, and the first direction is a vehicle height direction; and
a connection structure, configured to fixedly connect the energy compartment frame to the beam frame along the first direction.

2. The vehicle frame according to claim 1, **characterized in that** an end of the energy compartment frame along a second direction is provided with a positioning portion, and the beam frame abuts against the positioning portion along the first direction, wherein the second direction is a vehicle traveling direction; and
the connection structure comprises a first fastener, the first fastener running through the beam frame and the positioning portion along the first direction.

3. The vehicle frame according to claim 2, **characterized in that** the beam frame is provided with a connection portion extending along the second direction; and
the connection portion abuts against and fits the positioning portion along the first direction, and the first fastener runs through the connection portion and the positioning portion along the first direction.

4. The vehicle frame according to claim 3, **characterized in that** surfaces of the positioning portion and the connection portion that abut against each other are both planar.

5. The vehicle frame according to claim 3 or 4, **characterized in that** the beam frame is provided with at least two connection portions, wherein two of the connection portions are spaced apart along a third direction, the third direction being perpendicular to the first direction and the second direction; and
the energy compartment frame is provided with at least two positioning portions, wherein two of the positioning portions are spaced apart along the third direction, and the connection portions are connected to the positioning portions in a one-to-one correspondence.

6. The vehicle frame according to claim 4 or 5, **characterized in that** the energy compartment frame comprises a frame body, a mounting plate disposed in the frame body, and a connection block disposed at a corner of the frame body, wherein the mounting plate is configured to connect a battery cell; and
the corner of the frame body and the connection block together form the positioning portion, and at least one of the frame body and the connection block is provided with a first connection hole for installing the first fastener.

7. The vehicle frame according to any one of claims 1 to 6, **characterized in that** the beam frame is further provided with an abutting portion, the abutting portion and the energy compartment frame are both disposed on the same side of the connection portion along the first direction, and the abutting portion abuts against the energy compartment frame along a second direction, wherein the second direction is a vehicle traveling direction.

8. The vehicle frame according to claim 7, **characterized in that** the vehicle frame further comprises a second fastener, and the second fastener runs through the abutting portion and the energy compartment frame along the second direction.

9. The vehicle frame according to claim 8, **characterized in that** the energy compartment frame is provided therein with an accommodation space for accommodating the battery cell, and the connection structure and the second fastener are both disposed outside the accommodation space.

10. The vehicle frame according to any one of claims 7 to 9, **characterized in that** the beam frame comprises a front compartment and a rear compartment; the energy compartment frame comprises a first end and a second end oppositely disposed along the second direction, the first end being connected to the front compartment, and the second end being connected to the rear compartment;
wherein the front compartment abuts against the first end along the first direction; and/or
the rear compartment abuts against the second end along the first direction.

11. The vehicle frame according to claim 10, **characterized in that** the abutting portion is disposed at an end of the front compartment close to the energy compartment frame; and/or
the abutting portion is disposed at an end of the rear compartment close to the energy compartment frame.

12. The vehicle frame according to claim 11, **characterized in that** the front compartment further comprises an upper longitudinal beam and a lower longitudinal beam distributed along the first direction, and a vertical beam connected between the upper longitudinal beam and the lower longitudinal beam, wherein the connection portion is connected to the upper longitudinal beam, and the abutting portion is connected to the lower longitudinal beam.

13. The vehicle frame according to any one of claims 7 to 12, **characterized in that** a surface of the abutting portion facing the energy compartment frame and a surface of the energy compartment frame facing the abutting portion are both planes parallel to the first direction.

14. The vehicle frame according to any one of claims 10 to 12, **characterized in that** the rear compartment comprises two rear longitudinal beams and a rear transverse beam connected between the two rear longitudinal beams, wherein the rear longitudinal beams are provided with the connection portion, and the connection portion is fixedly connected to the energy compartment frame through the connection structure.

15. The vehicle frame according to claim 14, **characterized in that** the second end of the energy compartment frame is provided with a mounting beam, and the rear transverse beam abuts against the mounting beam along the first direction; and
the vehicle frame further comprises a third fastener, wherein the third fastener runs through the rear transverse beam and the mounting beam along the first direction.

16. The vehicle frame according to any one of claims 1 to 15, **characterized in that** both the beam frame and the energy compartment frame are steel components.

17. The vehicle frame according to any one of claims 1 to 16, **characterized in that** at least one of the beam frame and the energy compartment frame comprises a roll-formed component.

18. A vehicle body, **characterized by** comprising:
a battery cell; and
the vehicle frame according to any one of claims 1 to 17, wherein the energy compartment frame in the vehicle frame is configured to accommodate the battery cell to assemble an energy compartment, and the energy compartment is connected to the beam frame.

19. A vehicle body assembly method, **characterized by** comprising:
providing the vehicle frame according to any one of claims 1 to 17, fixedly connecting a battery cell to the energy compartment frame to assemble an energy compartment;
abutting the beam frame against an end of the energy compartment frame along a first direction; and
fixedly connecting the energy compartment frame to the beam frame along the first direction using the connection structure.

20. A vehicle, **characterized by** comprising the vehicle frame according to any one of claims 1 to 17 or the vehicle body according to claim 18.
